# EUROPEAN PATENT APPLICATION

(11) **EP 1 750 051 A2**
(43) Date of publication of application: **07.02.2007**
(21) Application number: 06118404.0
(22) Date of filing: 03.08.2006
(51) Int. Cl.: F17C 13/04

(54) **Gas cylinder with manual on/off and valve**

(30) Priority: 04.08.2005 US 197044
(71) Applicant: Linde Aktiengesellschaft, 65189 Wiesbaden (DE)
(72) Inventor: Macneal, James R., Burton, OH 44021 (US)
(74) Representative: Poulin, Gérard

(57) **Abstract**

Provided is a device (10) for pressurized contents comprising a container (16) having a hollow interior for location of the contents therein, a valve body (121) having a channel (122) in fluid communication with the interior of the container (16), a stem (124) having a tapered end (126) extending into the valve body (121), wherein the stem is moveable within the valve body, a single port (132) for conveyance of the contents between the container exterior and the container interior, wherein the device has no additional port for conveyance of the contents between the container exterior and the container interior, and a seal arrangement (128) between the valve body (121) and the tapered end (126) to prevent conveyance of the contents through the single port when the tapered end is in a seated position, wherein a rate of conveyance of the contents through the single port is controllable by movement of the stem (124) within the valve body (121).

## Description

### FIELD OF THE INVENTION

The present invention is directed in general to containment of a gas, and more particularly to a refillable gas containment and delivery system having a common shut-off and manual flow controller for gas flow out of a cylinder and a common fill and extraction port.

### BACKGROUND OF THE INVENTION

Cylinders containing a compressed gas can be found in environments such as manufacturing, research, production or synthesis facilities, hospitals, labs, classrooms, or any environment where a source of the desired gas is not otherwise available. The cylinders have a wide range of sizes and shapes, and are adapted to hold a particular type of gas. Most cylinders are a generally upright container having a flat bottom to allow the cylinder to rest vertically on a level surface. At the top of the cylinder is a port through which the compressed gas leaves the cylinder, typically through a valve installed on the cylinder by the gas supplier, and then through a regulator and/or flow meter installed by the end user and adapted to control the flow of gas from within the cylinder to the application point. Such cylinders are commonly employed to transport calibration gases, for example, to calibrate instruments, air monitors and safety systems at remote locations.

Gas cylinders are transported to an end user by a supplier at a time when the end user desires the gas. There are two types of gas cylinders used for portable and other calibration purposes. A type 1 cylinder is a refillable cylinder, which generally, but not always, provides protection to the valve by means of a metal cylinder cap. Refilling certain type 1 cylinders is typically accomplished through a fill port that must be engaged by a compatible fitting projecting from a supply line. During refilling, the fittings allow gas to flow from an external source through the cylinder valve into the cylinder.

A type 2 cylinder is the so-called "disposable" cylinder that generally provides no valve protection, as there is generally no metal cap with a type 2 cylinder. The metal cap, as found in some type 1 cylinders, is designed to protect the cylinder valve from contact with, and damage from, foreign bodies, encountered in a fall, drop or other impact of the cylinder valve during such an accidental event. Typically, gas is delivered to the end user in suitable quantities to satisfy the end user's needs for a period of time. Several gas cylinders are usually stored at the end user's location at any given time to ensure the availability of the gas when it is needed. As the contents of the cylinders are consumed, the pressure gradient between the interior of the cylinder and the ambient environment is no longer large enough to allow a user to withdraw gas from within the cylinder. At such a time, the cylinder's contents become consumed, and the cylinders are returned to storage at the end user's location to await final disposition. A substantial number of end users simply throw away disposable cylinders when the contained gas has been consumed, whether or not the cylinders are properly processed for disposal according to Federal, State and local regulations.

In type 2, or disposable cylinders, once the cylinders' contents have been consumed, the cylinders are to be properly recycled or discarded. Due to the sometimes potential and actual hazardous nature of the cylinders' contents, recycling the cylinders is problematic, and can cost from hundreds of dollars to thousands of dollars for each cylinder. End users operating on a limited budget may often stockpile many cylinders until an alternative use, or a cheaper avenue of disposal arises. The stockpile of consumed cylinders is often neglected and exposed to the elements, which causes the cylinders to degrade over time. As the cylinders degrade, cracks or leaks may develop and allow residual traces of gas to escape the cylinder into the surrounding environment. Further, consumed cylinders may tip or otherwise be knocked over, once again breaching the integrity of the cylinders, possibly allowing residual traces of gas to escape, as well as producing the projectile effect aforementioned.

To maximize portability, and minimize weight, the type 2 or so-called disposable cylinders have been developed to be discarded upon consumption. These are commonly used to provide a one time supply of gas to an end user who has few alternatives for a portable gas supply other than gas contained within a disposable cylinder. The disposable cylinders are frequently discarded as solid waste when they are consumed. Once again, though, due to the often hazardous nature of the cylinders' contents, facilities that accept consumed cylinders typically charge large disposal fees. Further, discarding the disposable cylinders contributes to the growing accumulation of solid waste at disposal sites. As a result, there is frequent confusion on the part of end users as to how to properly dispose of or recycle "disposable" cylinders when the contents have been fully or partially consumed.

If an exposed valve, flow meter and regulator are used with the cylinder, great care must be exercised on the part of an end user to prevent an impact from a foreign object. A sufficiently strong impact may shear any of the valve, flow meter or regulator from atop the cylinder, causing a sudden release of the cylinder's contents. Pressurized cylinders having the valve, flow meter or regulator sheared off during a fall or otherwise striking a foreign body, have been known to become dangerous due to the sudden thrust from the pressure release. In such cases, the cylinder can become a projectile.

### SUMMARY OF THE INVENTION

Provided is a device for pressurized contents comprising a container having a hollow interior for location of the contents therein, a valve body having a channel in fluid communication with the interior of the container, a stem having a tapered end extending into the valve body, wherein the stem is moveable within the valve body, a single port for conveyance of the contents between the container exterior and the container interior, wherein the device has no additional port for conveyance of the contents between the container exterior and the container interior, and a seal arrangement between the valve body and the tapered end to prevent conveyance of the contents through the single port when the tapered end is in a seated position, wherein a rate of conveyance of the contents through the single port is controllable by movement of the stem within the valve body.

Further provided is a method of filling a device for pressurized contents comprising the steps of providing the device, wherein the device comprises a container having a hollow interior for location of the contents therein, a valve body having a channel in fluid communication with the interior of the container, a stem having a tapered end extending into the valve body, wherein the stem is moveable within the valve body, a single port for conveyance of the contents between the container exterior and the container interior, wherein the device has no additional port for conveyance of the contents between the container exterior and the container interior, an outlet, wherein the single port extends from the valve body and is at least partially defined by the outlet, and a seal arrangement between the valve body and the tapered end to prevent conveyance of the contents through the single port when the tapered end is in a seated position, wherein a rate of conveyance of the contents through the single port is controllable by movement of the stem within the valve body, and conveying the contents to the container interior through the single port. Further provided is a method for providing pressurized contents to a container device comprising the steps of providing the device, wherein the device includes a container with a hollow interior for location of the contents therein, a single port for conveyance of contents between an exterior of the container and an interior of the container, no additional port for conveyance of the contents between the container exterior and the container interior, and a manually operated valve for preventing and controlling a flow rate of contents through the single port, and bringing a supply line into operative engagement with the single port, including attaching a filling adaptor to the device, engaging the supply line to the filling adaptor, opening the valve, and conveying contents through the single port to the interior of the container.

### BRIEF DESCRIPTION OF THE DRAWINGS

Figure 1 is a perspective view of an example embodiment of a gas cylinder having a manual on/off and flow control valve.
Figure 2 is a second perspective view of the example embodiment of FIGURE 1.
Figure 3 is a third perspective view of the example embodiment of FIGURE 1.
Figure 4 is a perspective view of an example embodiment of a gas cylinder having a manual on/off and flow control valve.
Figure 5 is a second perspective view of the example embodiment of FIGURE 4.
Figure 6 is a third perspective view of the example embodiment of FIGURE 4.
Figure 7 is a fourth perspective view of the example embodiment of FIGURE 1.
Figure 8 is a perspective view of a portion of the example embodiment shown in FIGURE 1.
Figure 9 is a section view of the example embodiment shown in FIGURE 1.

### DETAILED DESCRIPTION OF THE EXAMPLE EMBODIMENTS

Certain terminology is used herein for convenience only and is not to be taken as a limitation on the present invention. Further, in the drawings, the same reference numerals are employed for designating the same elements throughout the figures and certain features may be shown in somewhat schematic form.

Provided is a valve and a housing for a device capable of containing pressurized contents, such as a gas cylinder, for example. The valve includes a valve body and a stem with a tapered end. Manual operation of the valve is provided by a grasp connected to a proximal end of the stem. Through manipulation of the grasp, for example, by turning the grasp, the stem can be made to move within the body. Movement of the stem within the body allows for seating and unseating the stem from the body and manual flow control of contents out of the gas cylinder to which the valve is coupled.

The device includes a common fill and discharge port. The port may be partially defined by an outlet which projects from the valve body and which is suitable for attachment to a source of contents to be conveyed to the cylinder or to a device for receiving contents from the cylinder. For example, the outlet is suitable for attachment to a hose or tube having a connector for mating with the outlet.

The device further includes a protective housing. The housing partially enshrouds the valve body, grasp, and port. However, it provides access to these components while partially enshrouding them. The protective housing includes a handle for transporting the entire device. The protective housing also protects the valve from impact by transferring impact force toward the cylinder.

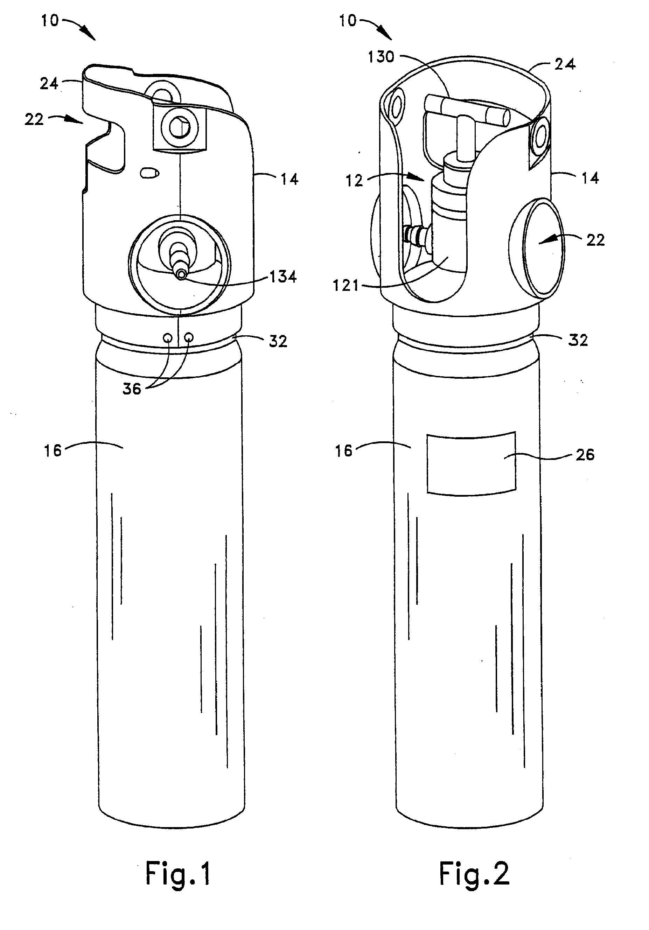

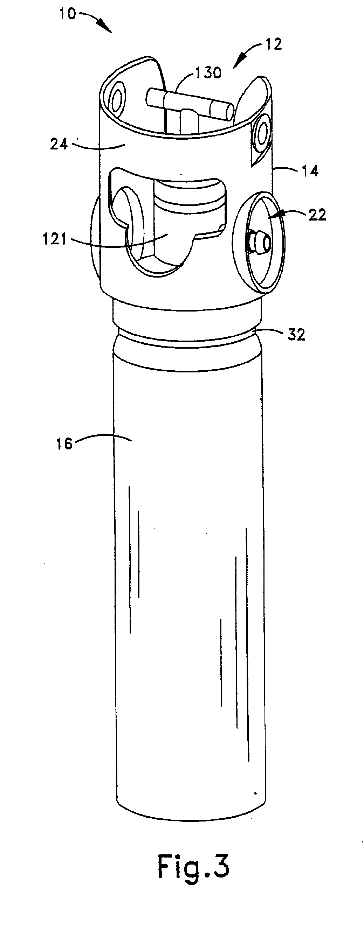

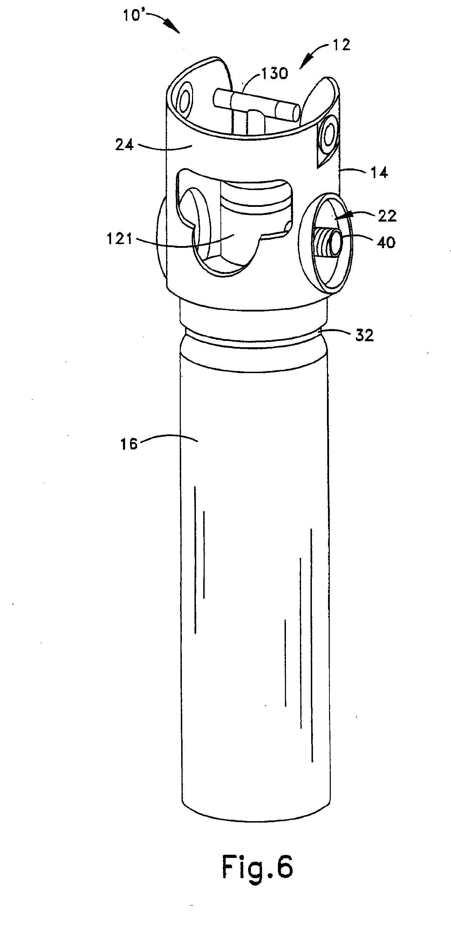

Figs. 1-3 and Figs. 4-6 show three different sides of a first example embodiment of the device 10 and a second example embodiment of the device 10', respectively. Each of these views show some, but not all, of the structure of the device 10, 10'. The inability to see all of the structures within any one of the views is partially due to the presence of the protective housing 14. Common item numbers are used through the figures to denote structures that are the same, or substantially similar, in the various views and example embodiments depicted.

Both of the first example embodiment and second example embodiment include a valve assembly 12 and a protective housing 14, which are installed on a container 16 for holding pressurized contents. It is to be appreciated that the contents may be liquid and/or gas, or some other pressurized contents, and it is to be appreciated that the contents may have any of numerous chemical compositions. In one specific example, the contents may be a portable calibration gas. Although the contents may be varied, for ease of reference the contents are referred to herein as either contents or gas.

Also, although it is to be appreciated that the container 16 may have any of several shapes, configurations, etc., the container 16 will typically be a cylinder. As such, the container 16 is referred to herein as the cylinder 16, with the understanding that the present invention is applicable to different containers. The cylinder 16 is to be manufactured from a material having properties suitable to withstand the pressures to which the cylinder 16 will be subjected and the environment in which the cylinder 16 will be used. Also, the cylinder 16 is to be manufactured from a material that will not be detrimentally affected by the gasses to be contained within the cylinder 16.

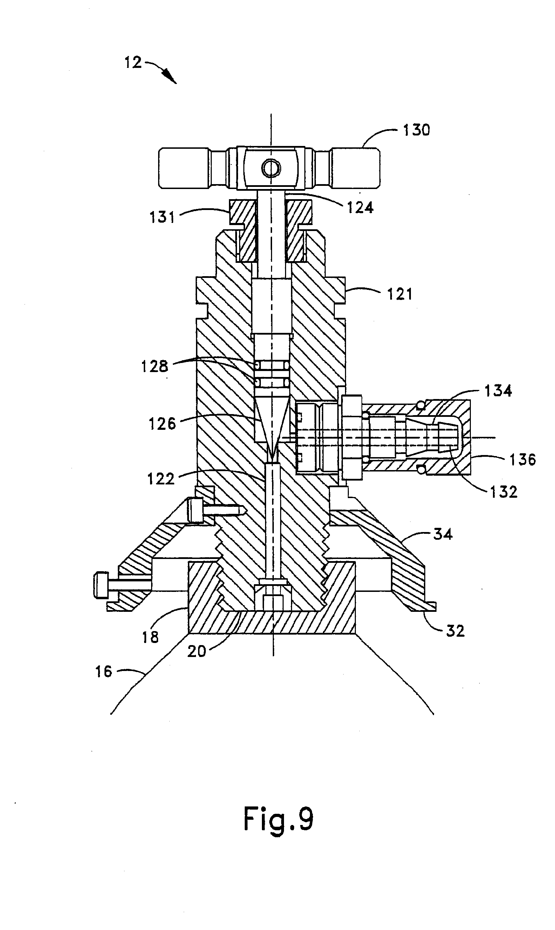

The valve assembly 12 includes a valve body 121 (Fig. 9). The valve assembly 12 is coupled to an opening neck 18 in the cylinder 16 at a lower portion of the valve body 121. The opening neck 18 and valve body 121 include compatible features, for example, threaded portions, to engage each other and form a connection 20 between the valve body 121 and the cylinder 16. The physical joining of the valve assembly 12 and the cylinder 16, for example, the engagement of the threaded portion on the valve body 121 with the threaded portion of the opening neck 18 of the cylinder 16, is performed by an authorized party, such as a supplier of gas, for example. Although it is possible to remove the valve assembly 12 from the cylinder 16, such removal, for example, breaking the connection 20, should only be done by an authorized party.

The protective housing 14 can be seen in Figs. 1-7. The protective housing 14 enshrouds, for example, at least partially encircles or encloses, the valve assembly 12. The protective housing 14 is intended to provide a level of protection and as such is formed from a generally rigid and durable material. Examples of such materials include plastic, rubber, and/or metal materials. However, it is contemplated that other protective materials could be used.

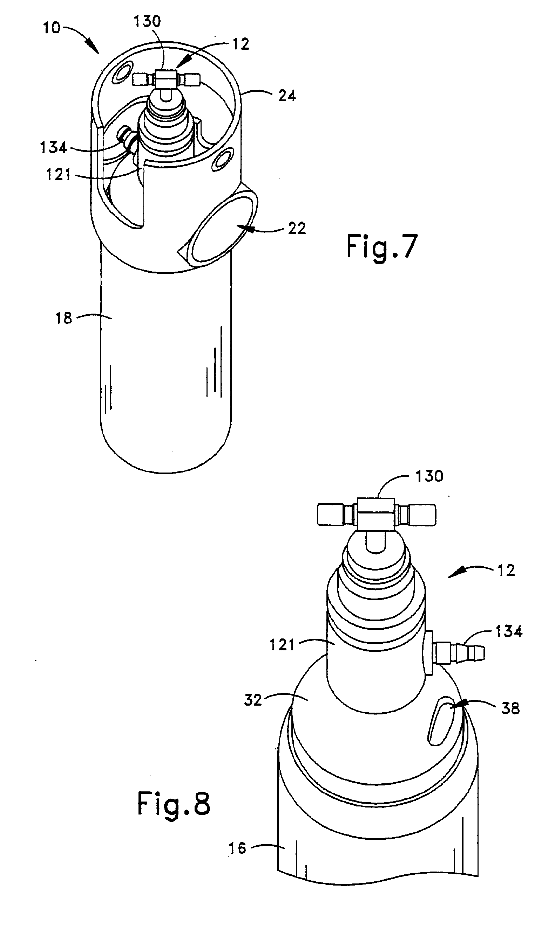

The protective housing 14 is coupled to the cylinder 16 so that the entire device is readily transportable. The housing 14 protects the valve assembly 12 from impact. It is to be appreciated that the protective housing 14 is operatively connected to the cylinder to transfer impact force toward the cylinder 16. This connection is in distinction from a connection of a protective housing to a valve assembly, which could potentially transfer undesirable impact force to the valve assembly. In one example of the connection of the protective housing 14 to the cylinder 16, a shield 32 (See Fig. 8) is provided in accordance with one aspect of the present invention. As can be appreciated, the example shield 32 has an annular configuration and is shaped generally as a truncated cone. The shield 32 has a central aperture at an upper end 34, and the shield 32 is seated against an upper end of the opening neck 18 on the cylinder 16 at the location of the central aperture of the shield 32.

Fasteners 36 couple the protective housing 14 to a lower portion of the shield 32 adjacent to a shoulder of the cylinder 16. In one example embodiment, several fasteners 36 are spaced around the periphery of the housing 14. In the event of force application to the housing 14, the housing 14 transfers the force around the circumference of the lower portion of the shield 32. It is contemplated that impact force is transmitted from the protective housing 14 toward the cylinder 16 via the shield 32. This is due to the interface between the shield 32 and the cylinder 16, rather than a force transmission path that includes the valve assembly 12.

It is also contemplated that the shield 32 may function as an energy dissipating component. An impact that is sufficiently large and/or sudden could impart a sufficiently large force impulse transferred from the housing 14 that will cause deformation of the shield 32. This deformation prevents damage to other components of the device 10. This damage prevention can include damage prevention to the valve assembly 12 and the cylinder 16 and the connection between the valve assembly 12 and cylinder 16. As such, when the valve assembly 12 is installed on the cylinder 16, the shield 32 forms a so-called "crumple-zone" that will dissipate a portion of a force imparted on the housing 14 by deforming. In order to provide for such energy dissipation, the shield 32 is made of a material, dimensioned and configured accordingly, that will plastically yield. One example of such a material is aluminum.

It is to be noted that the presence of the shield 32 may limit visibility of some structure, and specifically the connection 20 between the valve body 121 and the opening neck 18 of the cylinder 16. In one example, at least one aperture 38 (Fig. 8) is formed in the shield 32 to allow a person, for example, an operator, to inspect the connection 20. Also, the one or more apertures 38 in the shield 32 may provided added ventilation at the location of the connection 20 between the valve body 121 and the cylinder 16.

It is to be appreciated that, in accordance with one aspect of the present invention, the housing 14 is not intended to be removed during routine use, for example, during conveyance of contents, such as withdrawal of contents or filling of contents. Openings 22 in the housing 14 provide for access to and/or viewing of the various components enshrouded by the housing 14, such as the valve assembly 12, for example. As such, the housing 14 is configured to provide at least one opening 22 for access and/or viewing of at least a portion of the valve assembly 12. In the shown example, several openings 22 are provided for access and/or viewing of various components of the valve assembly 12, the components being discussed further below.

As yet another possible feature, the protective housing 14 may include a handle 24 and/or connection points for a support strap or the like. Improved portability may be provided by the provision of the handle 24 and/or support strap. Additional features of the present invention may include visual indicia 26 located on the cylinder 16, valve assembly 12, and/or housing 14. The visual indicia 26 can provide information regarding contents, handling instructions, safety information and/or other information.

Figs. 1-3 & 7 and the section view of Fig. 9 show a first embodiment of the device 10 in accordance with one aspect of the present invention. The shown device 10 includes a valve assembly 12 coupled to a cylinder 16 and enshrouded by a protective housing 14. The valve assembly 12 includes a valve body 121. The valve body 121 includes a channel 122 that is in fluid communication with the interior of the cylinder 16 and that runs through a portion of the valve body 121. The channel 122 allows for the conveyance of gas into the cylinder 16 from, for example, a filling source, or the conveyance of gas out of the cylinder 16.

The valve body 121 can be formed of a material that is compatible with a desired gas or a plurality of gasses. For example, the valve body 121 can be formed of a material that will resist corrosion in the presence of a desired gas. Examples of compatible materials could be stainless steel or an alloy that includes aluminum, silicon, and bronze, for example.

The valve body 121 includes a stem 124 that is movable within the valve body 121. The stem 124 includes a proximal end that extends from the valve body 121 and a distal end 126 that is tapered and located within the valve body 121. The tapered distal end 126 and the valve body 121 form a seal arrangement to prevent the conveyance of gas into or out of the channel 122. The stem 124 further includes annular seals, for example, O-rings 128, to prevent the conveyance of gas along the stem 124 to the proximal end.

A grasp 130 is located at the proximal end of the stem 124, exterior to the valve body 121. As stated above, the stem 124 is movable within the valve body 121. The grasp 130 provides a handhold for facilitating manual movement of the stem 124. For example, the stem 130 could be threaded into the valve body 121. Accordingly, a turning motion imparted to the stem 124 could allow the stem 124 to move within the valve body 121. The grasp 130 could aid an operator in imparting such a turning motion. For example, the grasp 130 could be a knob or a "T" like handle.

A bushing 131 is provided at the proximal end of the stem 124 to prevent the ingress of contaminants into the valve body 121 along the stem 124 and to provide support to the stem 124.

As discussed above, the tapered distal end 126 of the stem 124 and the valve body 121 form a seal arrangement to prevent the conveyance of gas into or out of the channel 122. When the tapered distal end 126 is in a seated position against the valve body 121, conveyance of gas into or out of the channel 122 would be prevented.

Furthermore, the tapering of the distal end 126 can provide for control of the rate of conveyance of gas, for example, a flow rate, through the channel 122. For example, the flow rate of gas passing from the cylinder 16 and through the channel 122 may be controlled by movement of the tapered distal end 126 within the channel 122 in the valve body 121 relative to the seated position. As the stem 124 and its tapered distal end 126 are moved within the channel 122, for example, as when an operator manipulates the grasp, the flow rate of gas from the cylinder 16 can be changed and controlled, that is, throttled, by the operator. Within a throttling portion of the channel 122, as the tapered distal end 126 is moved further from the seated position, an increased flow rate of gas at the current pressure level within the cylinder 16 is obtainable. Conversely, as the tapered distal end 126 is moved nearer to the seated position in a throttling portion of the channel 122, a decreased flow rate of gas at the current pressure level within the cylinder 16 is obtainable.

Therefore, the valve assembly 12 provides for manual seating of the distal end 126 and manual movement of the distal end 126 within the channel 122. Accordingly, the device 10 provides manual flow shutoff and manual flow rate control.

In accordance with one aspect of the present invention, the tapered distal end 126 and the valve body 121 form a needle valve.

The present invention includes a common discharge and fill port, referred hereinafter as the common port 132. When the tapered distal end 126 of the stem 124 is unseated, the common port 132 is in fluid communication with the channel 122. However, when the tapered distal end 126 is seated, that is, when gas is prevented from flowing into or out of the cylinder 16, the common port 132 is not in fluid communication with the channel 122, but blocked by the seated distal end 122.

The common port 132 is at least partially defined by an outlet 134 that extends from the valve body 121. As will be discussed further below, the outlet 134 can be removably or irremovably insertable into a portion of the valve body 121, can be installed on an outer surface of the valve body 121, or can be integrally formed with the valve body 121, such as by molding or casting with the valve body 121, for example. Fig. 9 shows an example embodiment of the present invention in which the outlet 134 is threaded into a portion of the valve body 121. Outlet 134 will be referred to in the discussion below as representative of outlets in general. However, it is to be appreciated that the scope of the present invention is not limited to outlets that are threaded into a portion of the valve body, but includes all other types of outlets, such as those that are installed on an outer surface of the valve body 121, or those that are integrally formed with the valve body 121, for example. Also, the outlet 134 may have any of several specific constructions or configurations. For example, the outlet 134 could be configured to be compatible with an industry standard connector or connectors, or could be configured to be compatible with non-standard connectors. All possible constructions and configurations of the outlet 134 are intended to be within the scope of the present invention.

As discussed above, the outlet 134 extends from the valve body and at least partially defines the common port 132. The common port 132 provides a connection point for the coupling the device 10 to external structures, such as a source of gas to be conveyed to the cylinder 16, or an apparatus for consuming the gas. In accordance with one aspect of the present invention, the outlet 134 includes a hose barb for engaging a supply or discharge hose that has been slipped over the barbs. In accordance with a further aspect of the present invention, the outlet 134 includes threads on an outer surface for engaging a compatibly threaded apparatus or a cap for covering the outlet 134. The outlet 134 provides a single point of connection for filling the cylinder 16 with gas and withdrawing gas from the cylinder 16.

In an example embodiment, the common port 132 is the only port on the device 10 for the conveyance of gas between the container exterior and the container interior. That is, the device 10 lacks a port or ports in addition to the common port 132 for filling or withdrawing gas from the device 10. For example, the device 10 lacks a high pressure discharge port in addition to the common port 132. However, in a further example embodiment, the device 10 includes the common port 132 and an additional port.

The device 10 can include a removable adaptor and/or cover 136 for the outlet 134. Fig. 9 shows a cover 136 surrounding the outlet 134. However, it can be appreciated that a similarly configured adaptor that allows for the mating of an external device to the outlet 134 could be provided. For example, a filling adaptor could be provided to allow for the coupling of the outlet 134 to a source of supply gas to be conveyed to the cylinder 16. The adaptor and/or cover 136 could engage the outlet 134, such as by clipping or screwing onto the outlet 134, for example. Alternatively, the adaptor/cover 136 could engage the valve body. If the adaptor and/or cover 136 is configured as a cover, it could provide for a gas-tight seal around the outlet 134, when installed, to prevent the escape of gas from the cylinder 16 should the distal tapered end 126 of the stem 124 become unseated. If the adaptor and/or cover 136 is configured as an adaptor, it could provide for a gas-tight coupling between the outlet 134 and an external device.

In an example embodiment, the adaptor and/or cover 136 is a filling adaptor that clips onto the outlet 134. The filling adaptor can include internal tapered threads, for example, 1/4 inch, i.e. 6.35 mm, national pipe taper (NPT) threads, for engaging an external source of gas to be supplied to the cylinder 16. In a further example embodiment, the adaptor and/or cover 136 is a cover for the outlet 134. The cover and valve body 121 or protective housing 14 includes structure for securing the cover to the valve body 121 or protective housing 14, so that the cover will not be misplaced when not in use. For example, the cover is secured to the valve body 121 by a flexible ball chain.

The outlet 134 can be removably or irremovably insertable into a portion of the valve body 121. For example, the outlet 134 may be threaded into the valve body, or clip into the valve body. Fig. 9 shows an insertable outlet 134 threaded into the valve body 121.

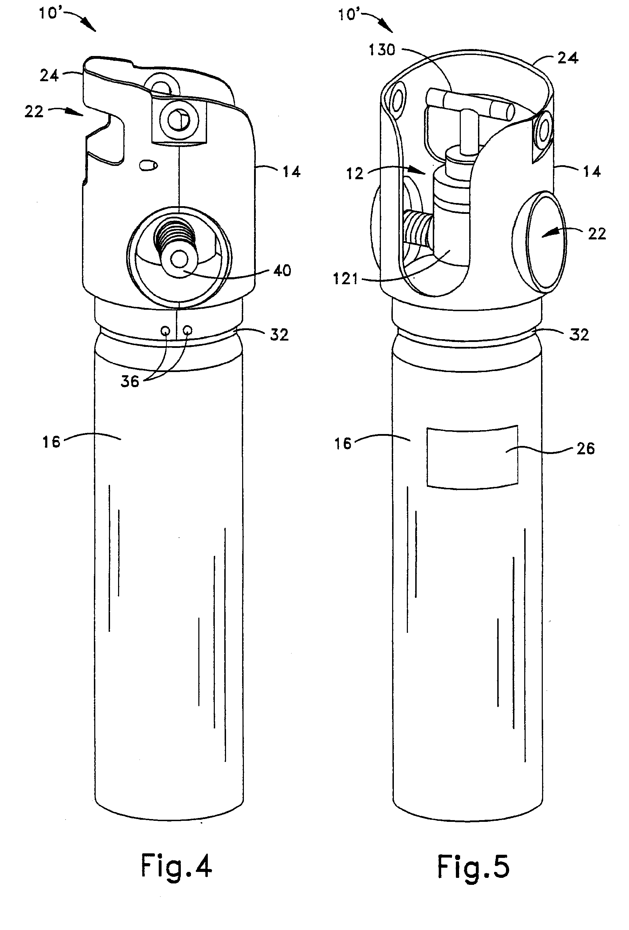

The device 10' shown in Fig. 4-6 includes an outlet 40 that is not insertable into a portion of the valve body 121. In this embodiment, the outlet 40 is integral to the valve body 121 and not removable from the valve body 121. For example, the outlet 40 can be formed with the valve body 121, such as molded or cast with the valve body 121. The outlet 40 can also be machined with the valve body 121, such as cut from a common piece of stock material during a manufacturing process. The outlet 40 can also be welded to the valve body 121. The outlet 40 may also have threads on its exterior as shown. Such threads could be used to couple the outlet 40 to an external device, such as a source of supply gas, for example. The threads could also allow for the placement of a cap, for example a gas-tight cap, over the outlet 40 to protect the outlet 40 and prevent an undesired escape of gas from the cylinder 16.

The handle 130 and the protective housing 124 could include openings for securing the handle 130 to the housing 124. For example, the handle 130 could be tied down to the housing 124 through such openings. By tying the handle 130 to the housing 124, unexpected movement of the handle 130, and possible movement of the stem 126 could be avoided. Accidental movement of the stem 126 could result in an unexpected discharge of gas from the cylinder 16 through the channel 122 and common port 132.

As discussed above, the cylinder 16 can be filled with gas supplied by an external gas source through a connection at the outlet 134. It will be appreciated that the cylinder 16 can also be refilled after a quantity of gas within the cylinder 16 has been released. Prior to filling or refilling the cylinder 16, it may be desirable to evacuate any remaining or residual gas that is present within the cylinder 16. Evacuation can be accomplished by an operator manipulating the grasp 130 and causing the stem 124 to move within the valve body 121, resulting in an unseating of the tapered distal end 126. If desired, the stem 124 could be moved to a fully open position. The unseating of the distal end 126 will allow remaining gas to pass through the common port 132 and out of the device 10. Remaining gas should be vented to an appropriate location. After remaining gas is vented, a vacuum could be created and applied to the outlet 134 to lower the pressure in the cylinder 16 and evacuate the cylinder 16 more fully. While generally maintaining the low pressure in the cylinder 16, the vacuum could be discontinued and the outlet 134 connected to an external source of gas, such as through a supply line engaged to the outlet 134, for example. The engagement of the outlet 134 to the supply line could be provided through a filling adaptor attached to the device 10.

Gas could then be fed to the cylinder 16 until a predetermined pressure is reached, the predetermined pressure falling within the allowable range of pressures for the particular cylinder 16 being filled. Once this pressure is reached, the distal end 126 of the stem 124 could be reseated through manipulation of the grasp 130, which will cause the gas in the cylinder 16 to be retained. Gas trapped within the common port 132 and a gas supply line (if provided) could then be vented to an appropriate location. A gas-tight cover could then be secured to the outlet 134, as described above. The cylinder 16 could be refilled with gas as needed.

It is to be noted that all aspects of the cylinder 16, valve assembly 12, external source of gas, gas supply line, etc. should be inspected for the presence of obstructions or other issues that could possibly interfere with the filling process. Any discovered obstructions should be removed before proceeding with the rest of the filling process. Likewise, all features should be inspected for leaks throughout the filling process. These inspections should take place before, during and after the filling process to minimize the chances of an accidental release of the gas from within the cylinder 16.

What has been described above includes exemplary implementations of the present invention. It is, of course, not possible to describe every conceivable combination of components or methodologies for purposes of describing the present invention, but one of ordinary skill in the art will recognize that many further combinations and permutations of the present invention are possible. Accordingly, the present invention is intended to embrace all such alterations, modifications and variations that fall within the scope of the appended claims.

## Claims

1. A device (10) for pressurized contents, comprising:
a container (16) having a hollow interior for location of the contents therein;
a valve body (121) having a channel (122) in fluid communication with the interior of the container (16) ;
a stem (124) having a tapered end (126) extending into the valve body (121), wherein the stem (124) is moveable within the valve body (121);
a single port (132) for conveyance of the contents between the container exterior and the container interior, wherein the device (10) has no additional port for conveyance of the contents between the container exterior and the container interior; and
a seal arrangement (128) between the valve body (121) and the tapered end (126) to prevent conveyance of the contents through the single port (132) when the tapered end (126) is in a seated position, wherein a rate of conveyance of the contents through the single port (132) is controllable by movement of the stem (124) within the valve body (121).

2. Device according to claim 1, wherein the valve body (121) comprises an alloy that includes aluminum, silicon, and bronze.

3. Device according to claim 1 or 2, further comprising a grasp (130) operatively coupled to the stem (124) for imparting movement within the valve body (121) to the stem (124).

4. Device according to claim 3, wherein rotating the grasp (130) causes the stem (124) to move.

5. Device according to any of claims 1 to 4, wherein the valve body (121) and stem (124) form a needle valve (12).

6. Device according to any of claims 1 to 5, further comprising an outlet (134), wherein the single port (132) extends from the valve body (121) and is at least partially defined by the outlet (134).

7. Device according to claim 6, wherein the outlet (134) further comprises a plurality of engagement threads located on an exterior surface of the outlet (134).

8. Device according to claim 6, wherein the outlet (134) further comprises an engagement barb, and further wherein the outlet (134) is removable from the valve body (121).

9. Device according to any of claims 6 to 8, further comprising a removable filling adaptor coupled to the outlet (134).

10. Device according to any of claims 6 to 9, further comprising:
a protective housing (14) coupled to the container and at least partially enshrouding the valve body (121) to protect the valve body (121) from impact and transmit impact forces to the container (16), wherein the protective housing (14) is configured to permit access to and operation of the outlet (134).

11. Device according to claim 10, comprising:
a grasp (130) operatively coupled to the stem (124) for imparting movement within the valve body (121) to the stem, wherein the protective housing (14) is configured to permit access to and operation of the grasp (130).

12. Device according to any of claims 6 to 11, wherein the protective housing (14) further comprises:
a handle (24); and
a shield (32) configured to deform upon transmission of impact force from the protective housing, wherein the shield provides the coupling between the protective housing (14) and the container (16).

13. A method of filling a device (10) for pressurized contents, comprising the steps of:
providing the device (10), wherein the device (10) comprises:
a container (16) having a hollow interior for location of the contents therein;
a valve body (121) having a channel (122) in fluid communication with the interior of the container (16);
a stem (124) having a tapered end (126) extending into the valve body (121), wherein the stem is moveable within the valve body (121);
a single port (132) for conveyance of the contents between the container exterior and the container interior, wherein the device has no additional port for conveyance of the contents between the container exterior and the container interior;
an outlet (134), wherein the single port (132) extends from the valve body (121) and is at least partially defined by the outlet (134); and
a seal arrangement (128) between the valve body (121) and the tapered end (126) to prevent conveyance of the contents through the single port (132) when the tapered end (126) is in a seated position, wherein a rate of conveyance of the contents through the single port (132) is controllable by movement of the stem (124) within the valve body (121); and
conveying the contents to the container interior through the single port (132).

14. Method according to claim 13, further comprising the step of attaching a filling adaptor to the outlet (134), wherein the conveying step includes conveying the contents to the container interior through the filling adaptor.

15. Method according to any of claims 13 to 14, wherein the device further comprises:
a grasp (130) operatively coupled to the stem (124) for imparting movement within the valve body (121) to the stem (124); and
a protective housing (14) coupled to the container (16) and at least partially enshrouding the valve body (121) to protect the valve body (121) from impact and transmit impact forces to the container (16), wherein the protective housing (14) is configured to permit access to and operation of the grasp (130), and further wherein the protective housing is configured to permit access to and operation of the outlet (134).

16. Method according to claim 15, wherein the protective housing further comprises:
a handle (24); and
a shield (32) configured to deform upon transmission of impact force from the protective housing (14), wherein the shield (32) provides the coupling between the protective housing (14) and the container (16).

17. Method for providing pressurized contents to a container device, comprising the steps of:
providing the device (10), wherein the device (10) includes a container (16) with a hollow interior for location of the contents therein, a single port (132) for conveyance of contents between an exterior of the container and an interior of the container, no additional port for conveyance of the contents between the container exterior and the container interior, and a manually operated valve (12) for preventing and controlling a flow rate of contents through the single port (132); and
bringing a supply line into operative engagement with the single port (132), including:
attaching a filling adaptor to the device (10);
engaging the supply line to the filling adaptor;
opening the valve (12); and
conveying contents through the single port (132) to the interior of the container (16).

18. Method according to claim 17, further comprising the step of evacuating residual contents from the container (16).

19. Method according to any of claims 17 to 18, further comprising the step of capping the single port with a gas-tight cap (136).

20. Method according to any of claims 17 to 19, wherein the device includes:
a protective housing (14) coupled to the container (16) and at least partially enshrouding the manually operated valve (12) to protect the valve (12) from impact and transmit impact forces to the container (16), wherein the protective housing (14) is configured to permit access to and operation of the valve (12), and further wherein the protective housing (14) is configured to permit access to and attachment of the filling adaptor, the protective housing (14) including:
a handle (24); and
a shield (32) configured to deform upon transmission of impact force from the protective housing (14), wherein the shield provides the coupling between the protective housing (14) and the container (16).
